# FASCICULE DE BREVET EUROPEEN

(11) **EP 1 868 832 B1**
(45) Date de publication et mention de la délivrance du brevet: **15.07.2009**
(21) Numéro de dépôt: 06726276.6
(22) Date de dépôt: 27.03.2006
(51) Int. Cl.: B60K 6/00

(54) **CHAINE DE TRACTION HYBRIDE ET VEHICULE HYBRIDE EQUIPE D'UNE TELLE CHAINE DE TRACTION HYBRIDE**
HYBRIDANTRIEBSKETTE UND DAMIT AUSGESTATTETES HYBRIDFAHRZEUG
HYBRID DRIVE CHAIN AND HYBRID VEHICLE EQUIPPED WITH SAME

(30) Priorité: 14.04.2005 FR 0503717
(43) Date de publication de la demande: 26.12.2007
(73) Titulaire: PEUGEOT CITROËN AUTOMOBILES S.A., 78140 Vélizy Villacoublay (FR)
(72) Inventeur: NOIRET, Christian, F-78230 Le Pecq (FR)
(86) Numéro de dépôt international: PCT/FR2006/050261
(87) Numéro de publication internationale: WO 2006/108977

(56) Documents cités:
- EP-A- 0 528 412
- EP-A- 1 354 744
- PATENT ABSTRACTS OF JAPAN vol. 017, no. 358 (M-1440), 7 juillet 1993 (1993-07-07) & JP 05 050865 A (AISIN AW CO LTD), 2 mars 1993 (1993-03-02)

## Description

L'invention concerne le domaine des véhicules et notamment une chaîne de transmission hybride équipant les véhicules automobiles.

L'invention concerne également un véhicule hybride équipé d'une telle chaîne de traction hybride.

### ARRIERE-PLAN DE L'INVENTION

Les contraintes d'implantation des groupes motopropulseurs dans les véhicules sont de plus en plus sévères du fait du nombre croissant d'accessoires (direction assistée, climatisation, ..), des normes de chocs (frontal, piéton, ...) et de dépollution (catalyseur, filtre anti-particules, ...).

L'intérêt de la traction automobile hybride combinant une propulsion thermique et électrique, est réel pour réduire les consommations mais aussi pour réduire les émissions de gaz polluant (émission de CO2).

Pour réaliser une chaîne de traction hybride, il faut implanter dans le compartiment moteur, en plus des organes côtoyant habituellement le moteur thermique, au moins une machine électrique dédiée pour pouvoir disposer d'un mode électrique pur de traction.

Pour répondre à cette problématique, certains constructeurs automobiles proposent des chaînes de traction hybrides basées sur des organes de transmission permettant une transmission infiniment variable, également désignée par les abréviations anglo-saxonnes "IVT" (Infinitely Variable Transmission).

Ces organes de transmission sont constitués principalement d'un train épicycloïdal et de deux machines électriques.

On distingue plusieurs types d'architecture de chaîne de traction hybride : une chaîne de traction hybride dite "série", une chaîne de traction hybride dite "parallèle" et une chaîne de traction dite "série/parallèle" (ou à dérivation de puissance).

Cette dernière architecture met en oeuvre un train épicycloïdal couplé au différentiel et donc aux roues du véhicule au moyen d'un réducteur de vitesse. Cette architecture permet une transmission infiniment variable et ne nécessitant pas d'embrayage.

On retrouve ce type d'architecture notamment décrit dans le document WO2005/007440.

L'inconvénient de cette solution est que, d'une part, le rendement n'est pas toujours optimal du fait de la dérivation de puissance électrique nécessaire à son fonctionnement et que, d'autre part, cette architecture nécessite de revoir complètement l'outil industriel.

Une autre solution consiste à intercaler une machine électrique entre le moteur thermique et la boîte de vitesses ; la transition de couple étant assurée par embrayage.

L'inconvénient de cette autre solution est que, d'une part, elle augmente la longueur du groupe motopropulseur et que, d'autre part, la position de la machine électrique en entrée de boîte, limite le potentiel de fonctionnement hybride.

Le document EP0528412 A1 décrit une chaîne de traction selon le préamble de la revendication 1.

### OBJET DE L'INVENTION

L'invention a pour objet une chaîne de traction hybride permettant de pallier les inconvénients précités. Elle a pour autre objet, un véhicule équipé d'une telle chaîne de traction hybride.

Elle a notamment pour avantage de proposer une architecture compacte dont l'agencement des différents organes est optimisé pour tenir dans un encombrement équivalent à celui d'une chaîne de traction standard optimisant en outre l'espace disponible sous le capot moteur du véhicule.

Un autre avantage d'une telle architecture est qu'elle ne nécessite pas de développement industriel spécifique.

D'autres avantages découlant directement de l'architecture d'une chaîne de traction hybride selon l'invention sont énumérés ci-dessous :
La machine électrique peut être utilisée pour faire de la récupération d'énergie pendant les phases de freinage.
La machine électrique peut être également utilisée pendant les phases de changement de rapport afin de réduire la rupture du couple.
La machine électrique peut être en prise directe sur le pont ou via un réducteur de vitesse permettent d'adapter au mieux ses caractéristiques électriques.
Enfin, la machine électrique peut être utilisée pour connaître de manière précise la vitesse des roues du véhicule et venir en remplacement de la mesure de vitesse ABS.

### BREVE DESCRIPTION DE L'INVENTION

L'invention propose une chaîne de traction hybride d'un véhicule comportant un moteur thermique couplé à un ensemble mécanique comportant une boîte de vitesses couplée à un différentiel lui-même couplé aux roues tractées du véhicule par leurs arbres de transmission respectifs, et au moins une machine électrique comportant un stator et un rotor, coopérant avec le moteur thermique via l'ensemble mécanique pour fournir une traction thermique et/ou électrique aux roues tractées.

Ladite chaîne de traction hybride est caractérisée en ce que la machine électrique est disposée entre le différentiel et une des roues tractées, en entourant l'arbre de transmission reliant la roue tractée au différentiel.

Ainsi, de façon avantageuse, la machine électrique est disposée dans une zone habituellement vide et son implantation ne nécessite que peu de modifications sur le moteur et l'ensemble mécanique.

Selon une autre caractéristique, le rotor de la machine électrique est monté solidairement sur un arbre creux entourant l'arbre de transmission et dont l'extrémité en regard du différentiel est agencée pour être accouplée mécaniquement au différentiel.

Selon un premier mode de réalisation de l'invention définie ci-dessus, le rotor est accouplé mécaniquement directement au différentiel.

Selon ce premier mode de réalisation, le différentiel comporte une portion d'arbre creux munie de cannelures qui engrènent avec l'extrémité de l'arbre creux de la machine électrique ; l'arbre creux comportant des cannelures complémentaires de celles de la portion d'arbre creux.

Selon un deuxième mode de réalisation, le rotor de la machine électrique est accouplé mécaniquement au différentiel via un moyen de réduction de vitesse disposé entre la machine électrique et le différentiel.

Selon une première variante, le moyen de réduction de vitesse comporte un train épicycloïdal disposé entre le rotor de la machine électrique et la couronne du différentiel ; l'extrémité du rotor correspondant au planétaire du train épicycloïdal et la couronne du différentiel correspondant à la couronne du train épicycloïdal.

Selon l'invention telle que définie ci-dessus, la sortie du différentiel, recevant et supportant en rotation une première extrémité de l'arbre de transmission, est maintenue en rotation à l'intérieur du rotor.

Selon une deuxième variante, le moyen de réduction de vitesse est un réducteur à pignons.

Selon cette variante, le réducteur à pignons comporte un premier et un deuxième pignons de diamètres différents ; les premier et deuxième pignons étant liés en rotation et engrenant respectivement avec la couronne du différentiel et une roue dentée fixée au rotor.

Selon une caractéristique avantageuse, le premier pignon est disposé dans un carter fixé sur l'ensemble mécanique contenant le différentiel et le deuxième pignon est disposé dans le corps enfermant la machine électrique, les deux pignons étant accouplés en rotation par un arbre d'entraînement.

Selon une autre variante, la machine électrique est creuse et rendue étanche par l'aménagement d'une paroi interne encapsulant le rotor.

Selon l'invention telle que définie ci-dessus, la machine électrique est enfermée dans un corps dont la partie extrême à l'opposé du différentiel comporte un moyen formant palier pour la deuxième l'extrémité de l'arbre de transmission.

Ce moyen formant palier, supporte la biellette anti-couple du moteur thermique. L'invention a pour autre objet un véhicule hybride équipé d'une chaîne de traction hybride telle que définie précédemment.

### BREVE DESCRIPTION DES DESSINS

D'autres caractéristiques et avantages de la présente invention apparaîtront plus clairement à la lecture de la description suivante de modes de réalisation non limitatifs de celle-ci, en se rapportant aux dessins annexés, sur lesquels :
- la figure 1 illustre une vue de dessus d'une implantation d'une chaîne de traction hybride selon l'invention, dans un véhicule automobile ;
- la figure 2 illustre schématiquement un premier mode de réalisation d'une chaîne de traction hybride selon l'invention ;
- la figure 3 illustre schématiquement un deuxième mode de réalisation d'une chaîne de traction hybride selon l'invention ; et
- la figure 4 illustre schématiquement un troisième mode de réalisation d'une chaîne de traction hybride selon l'invention ;
- la figure 5 illustre schématiquement une première variante du troisième mode de réalisation d'une chaîne de traction hybride selon l'invention ;et
- la figure 6 illustre schématiquement une deuxième variante du troisième mode de réalisation d'une chaîne de traction hybride selon l'invention.

Les éléments communs aux figures sont désignés par les mêmes références.

### DESCRIPTION DETAILLEE DE L'INVENTION

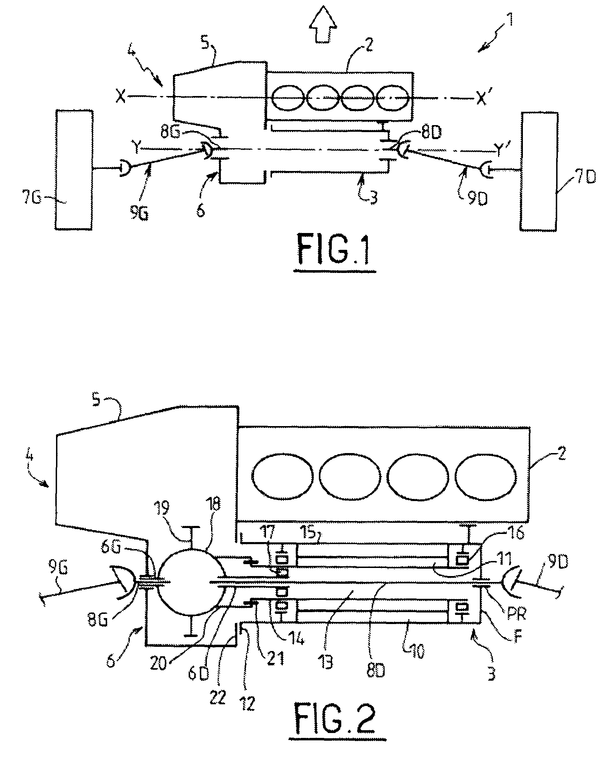

Les figures 1 à 4 présentent toutes une vue de dessus de l'avant d'un véhicule automobile 1, si on considère un véhicule à traction avant, ou de l'arrière du véhicule, si on considère un véhicule à traction arrière.

On considérera dans la présente description que les différentes figures représentent l'avant du véhicule.

Cette vue d'ensemble illustre schématiquement une implantation des principaux organes d'une chaîne de traction hybride d'un véhicule automobile, à savoir, un moteur thermique 2, une machine électrique 3, un ensemble mécanique 4 comportant une boîte de vitesses 5 et un différentiel 6 comportant une première et une deuxième sorties 6G et 6D couplées respectivement aux roues tractées 7G et 7D du véhicule 1 via respectivement deux arbres de transmission 8G et 8D et des moyens de liaison au sol 9G et 9D.

L'ensemble de pignonerie qui équipe classiquement une boîte de vitesses, n'a pas été représenté volontairement pour ne pas surcharger inutilement les figures.

Selon cette implantation, la machine électrique 3, dédiée à la propulsion électrique du véhicule 1, est disposée à l'arrière du moteur thermique 2 et fixée contre ce dernier.

La direction de déplacement du véhicule 1 en marche avant est symbolisée par une flèche sur la figure 1.

Selon les modes de réalisation décrits, l'axe de rotation YY' de la machine électrique 3 est parallèle à l'axe longitudinal XX' du moteur thermique 2. Les axes XX' et YY' passent respectivement par des plans parallèles entre eux. Ils peuvent également passer par des plans formant un angle entre eux.

L'ensemble mécanique 4 s'étend dans une direction perpendiculaire aux deux axes XX' et YY'. Il est disposé et fixé en bout du moteur thermique 2 et de la machine électrique 3 ; le moteur thermique 2 et la machine électrique 3 étant couplés respectivement l'un et/ou l'autre aux roues tractées 7G, 7D via cet ensemble mécanique 4.

La machine électrique 3 comporte un stator 10 et un rotor 11 concentriques et creux qui sont tous deux logés à l'intérieur d'un corps 12 de forme générale cylindrique. Le corps 12 comporte un évidement central 13 s'étendant selon l'axe longitudinal YY' de la machine électrique. Le stator 10 est fixé au corps 12 et le rotor 11 est disposé à l'intérieur du stator 10 et entoure l'évidement 13.

Le rotor 11 est solidaire d'un arbre creux 14 dont les deux extrémités libres dépassent du stator 11 et sont respectivement supportées et liées en rotation à des premier et deuxième paliers 15 et 16 fixés au corps 12 de la machine électrique 3. L'arbre creux 14 délimite ainsi l'évidement 13 autour duquel est agencée la machine électrique 3.

L'arbre de transmission 8D est monté centré et en rotation à l'intérieur de l'évidement 13 et débouche de part et d'autre du corps 12.

Une première extrémité de l'arbre de transmission 8D est couplée à une 7D des roues tractées 7G et 7D via la liaison au sol 9D et la deuxième extrémité est couplée à la première sortie 6D du différentiel 6.

La première sortie 6D du différentiel 6 se prolonge à l'intérieur de l'évidement 13 donc de l'arbre creux 14 supportant le rotor 11.

Un troisième palier 17 est disposé dans le même plan que le premier palier 15. Il est supporté à l'intérieur de l'arbre creux 14 et assure le centrage de la première sortie 6D du différentiel 6 avec l'arbre de transmission 8D.

Les stators 10, rotor 11, évidement 13 et arbre de roue 8D sont concentriques et de même axe correspondant à l'axe longitudinal YY' de la machine électrique 3.

Selon le mode de réalisation de la figure 2, la machine électrique 3 est en prise directe sur le différentiel 6.

Le rotor 11 est accouplé mécaniquement en rotation par une de ses extrémités au boîtier 18 du différentiel 6.

Le différentiel 6 de manière connue en soi, fournit un couple démultiplicateur pour chacune des roues tractées 7G, 7D du véhicule 1 tout en permettant leur entraînement. Il comporte classiquement une couronne 19 qui est accouplée mécaniquement à l'arbre (non représenté) du moteur thermique 2 via la boîte de vitesses 5 comportant une série d'engrenages non représentés. La couronne 19 est disposée à la périphérie du boîtier 18 qui est creux et qui supporte et renferme des satellites (non représentés) montés libres en rotation autour de leurs porte satellites respectifs (non représentés) ; porte satellites qui sont maintenus dans le boîtier 18.

Les satellites entraînent des planétaires (également non représentés), correspondant généralement à des pignons coniques solidaires et montés respectivement en bout de chaque arbre de transmission 8G et 8D, quand la couronne 19 du différentiel 6 est entraînée en rotation.

Le boîtier 18 est muni en outre d'une portion d'arbre creux 20 s'étendant centrée sur l'axe YY' et apte à coopérer en rotation avec l'extrémité 21 de l'arbre creux 11. Des cannelures sont par exemple ménagées de manière complémentaire, respectivement sur les arbres creux 20 et 21. Les cannelures peuvent être ménagées à l'intérieur de l'arbre creux 20 et à l'extérieur de l'arbre creux 21 ou réciproquement. Dans le premier cas, et tel qu'illustré à la figure 2, l'extrémité de l'arbre creux 21 pénètre et engrène à l'intérieur de la portion d'arbre creux 20.

De façon réciproque, c'est la portion d'arbre creux 20 qui pénétrerait et engrènerait à l'intérieur de l'extrémité de l'arbre creux 21.

L'engrenage 20, 21 ainsi formé est sensiblement disposé à l'interface entre le carter 22 de l'ensemble mécanique 4 et le corps 12 de la machine électrique 3.

La deuxième extrémité de l'arbre de transmission 8D est maintenue en rotation dans le fond F du corps 12 de la machine électrique 3 par un palier PR. De part l'implantation particulière de la machine électrique 3 selon l'invention, le corps 12 intègre avantageusement la fonction de palier relais qui est habituellement réalisée par une pièce rapportée pour servir de liaison entre l'arbre de transmission et la biellette anti-couple (non représentée) du moteur thermique 2.

Ainsi, selon cet agencement, les roues 7G et 7D sont entraînées directement soit par le moteur thermique 2 soit par la machine électrique 3 dans un espace optimisé.

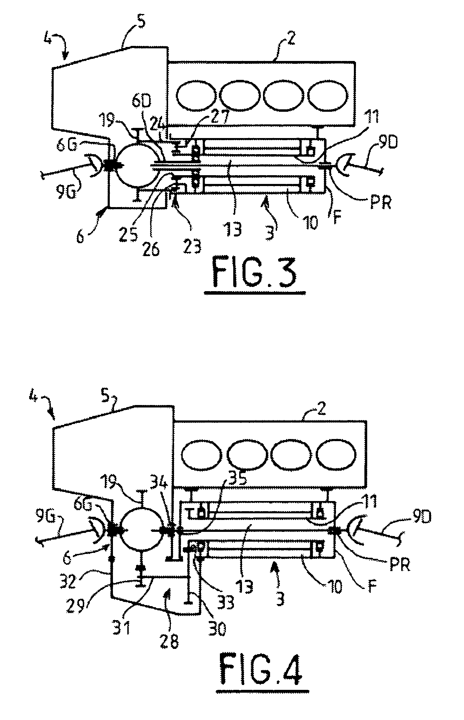

Le mode de réalisation de la figure 3 se distingue de celui de la figure 2 en ce que l'accouplement entre la machine électrique 3 et le différentiel 6 est réalisé au moyen d'un réducteur épicycloïdal 23.

Le réducteur 23 est constitué d'un train épicycloïdal qui est disposé entre l'arbre creux 14 solidaire du rotor 11 de la machine électrique 3 et la couronne 19 du différentiel 6.

La couronne 19 supporte une portion d'arbre creux cannelée 24 correspondant à la couronne du train épicycloïdal 23.

Comme pour le mode de réalisation de la figure 2, l'arbre creux 14 supportant le rotor 11, côté différentiel 6, est muni de cannelures 25 définissant dans ce mode de réalisation, le planétaire du train épicycloïdal 23.

Des satellites 26 sont disposés entre la couronne 24 et le planétaire 25 avec lesquels ils engrènent. Ils sont supportés par des porte satellites 27 qui sont eux même fixés au corps 12 de la machine électrique 3.

Selon le mode de réalisation de la figure 4, l'accouplement entre la machine électrique 3 et le différentiel 6 est réalisé au moyen d'un réducteur à pignons 28.

Le réducteur 28 est constitué d'un train d'engrenage comportant un premier et un deuxième pignons 29 et 30 de diamètres différents, liés en rotation et disposés respectivement à une première et deuxième extrémités d'un arbre secondaire 31. L'arbre 31 s'étend entre la couronne 19 du différentiel 6 et une roue dentée 33 fixée à l'arbre creux 14 du rotor 11, du côté du différentiel 6 ; les premier et deuxième pignons 29 et 30 engrenant respectivement avec la couronne 19 du différentiel 6 et la roue dentée 33.

Pour des questions de tolérance de montage et de facilité de montage, il pourra être avantageux de réaliser l'arbre secondaire 31 en deux segments liés entre eux en rotation

Ce train d'engrenage a pour but d'accoupler mécaniquement la couronne 19 du différentiel 6 au rotor 11 de la machine électrique 3 avec un rapport de démultiplication fixé par le rapport des diamètres et le nombre de dents des pignons 29 et 30.

Dans ce mode de réalisation, le réducteur à pignons 28 est disposé à l'intérieur d'un carter 32 qui est rapporté et fixé sous l'ensemble mécanique 5 et partiellement sous le corps 12 de la machine électrique 3. Le pignon de plus grand diamètre 30 ressort partiellement du carter 32 pour engrener avec la roue dentée 33 du rotor 11 à l'intérieur du corps 12 de la machine électrique 3.

La couronne 19 du différentiel 6 ressort du carter 22 de l'ensemble mécanique 5 pour engrener avec le pignon de petit diamètre 29 à l'intérieur du carter 32 du réducteur 28.

La sortie 6D du différentiel 6 est maintenue et liée en rotation au carter 22 de l'ensemble mécanique 5 par l'intermédiaire d'un palier 34 solidaire du carter 22.

L'arbre de transmission 8D est maintenu et lié en rotation au corps 12 de la machine électrique 3 par un palier 35 solidaire du corps 12.

Dans ce mode de réalisation, la sortie 6D du différentiel 6 ne pénètre pas dans la machine électrique 3 ; l'accouplement de la machine électrique 3 avec le différentiel 6 se faisant via le réducteur à pignons 28.

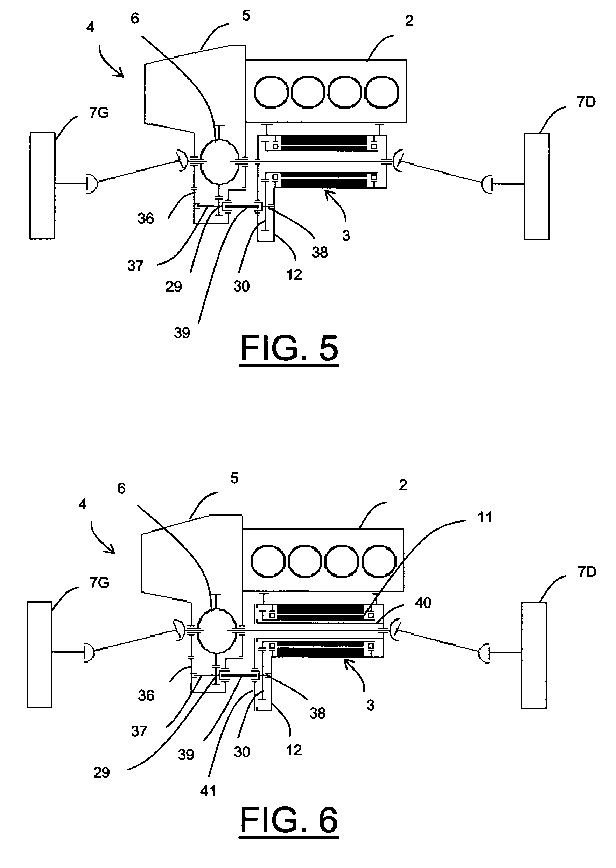

Dans une première variante du troisième mode de réalisation de la figure 4, et tel qu'illustré à la figure 5, on retrouve un réducteur à pignons 28 qui est toujours constitué d'un train d'engrenage comportant un premier et un deuxième pignons 29 et 30 de diamètres différents, mais qui sont agencés de manière différente pour se présenter sous la forme de deux étages de réduction de régime : un des deux étages étant disposé avec la machine électrique dans le corps 12.

Dans cette première variante, le premier pignon 29 est logé et maintenu seul à l'intérieur d'un carter 36 qui est rapporté et fixé sous l'ensemble mécanique 4. Le pignon 29 est solidaire d'un arbre 37 qui est fixé à rotation par ses deux extrémités dans deux paliers solidaires du carter 36. Un des deux paliers, et notamment le palier qui est en regard de la machine électrique 3, est ouvert pour laisser un accès externe à l'extrémité libre du premier arbre 37. Cette extrémité libre est munie d'un moyen de couplage en rotation apte à recevoir un arbre d'entraînement externe. Le moyen de couplage est réalisé par exemple au moyen d'une liaison du type arbre cannelé.

Toujours dans cette première variante, le pignon 30 est quant à lui logé et maintenu seul à l'intérieur du corps 12 de la machine électrique 3.

Le corps 12 de la machine électrique 3 présente ici une protubérance s'étendant en regard du carter 36 du pignon 29 pour enfermer le pignon 30 monté sur son arbre. De la même façon que pour le pignon 29; le pignon 30 est solidaire d'un arbre 38 qui est fixé à rotation par ses deux extrémités dans deux paliers solidaires du corps 12 de la machine électrique 3. Un des deux paliers, et notamment le palier qui est en regard du carter 36, est ouvert pour laisser un accès externe à l'extrémité libre de l'arbre 38. Cette extrémité libre est munie d'un moyen de couplage en rotation apte à recevoir un arbre d'entraînement externe. Le moyen de couplage est réalisé par exemple au moyen d'une liaison du type arbre cannelé.

La transmission de mouvement de la machine électrique 3 vers le différentiel 6 est réalisée par un arbre d'entraînement externe 39 qui vient s'insérer entre les extrémités libres des arbres 37 et 38 portant respectivement les pignons 29 et 30. Les extrémités de l'arbre intermédiaire 39 sont conformées pour coopérer respectivement avec les extrémités libres des arbres 37 et 38 portant respectivement les pignons 29 et 30.

Bien entendu, toutes les variantes concernant la réalisation de cet arbre d'entraînement 39 sont envisageables. Par exemple, l'arbre d'entraînement peut être confondu avec l'un ou l'autre des arbres 37 ou 38 portant les pignons 29 et 30.

Cet agencement permet de rendre complètement indépendant la machine électrique 3 de l'ensemble mécanique 4 comprenant la boîte de vitesses 5. Les carter 36 et corps 12 correspondant respectivement à l'ensemble mécanique 4 et la machine électrique 3 sont rendus étanches séparément au niveau de leurs accès entrée/sortie par de simples joints d'étanchéité.

L'agencement ainsi proposé est d'autre part complètement modulaire. La machine électrique 3 peut s'adapter à un groupe moto-propulseur existant sans modification majeure du moteur thermique 2 ou de l'ensemble mécanique 4.

Dans une deuxième variante du troisième mode de réalisation, illustrée à la figure 6 et qui reprend le même type d'accouplement que celui de la figure 5, la machine électrique 3 est creuse et rendue étanche par l'aménagement d'une paroi interne 40 encapsulant le rotor 11.

L'étanchéité n'est donc plus nécessaire au niveau des paliers et un simple couvercle 41 suffit pour fermer le corps 12 de la machine électrique 3.

La présente invention n'est bien sûr pas limitée aux modes de réalisation décrits et peut englober toutes variantes entrant dans le champ des revendications.

## Revendications

1. Chaîne de traction hybride d'un véhicule (1) comportant un moteur thermique (2) couplé à un ensemble mécanique (4) comportant une boîte de vitesses (5) couplée à un différentiel (6) lui-même couplé aux roues tractées (7G, 7D) du véhicule (1) par leurs arbres de transmission respectifs (8G, 8D), et au moins une machine électrique (3) comportant un stator (10) et un rotor (11), coopérant avec le moteur thermique (2) via l'ensemble mécanique (4) pour fournir une traction thermique et/ou électrique aux roues tractées (7G, 7D) , la machine électrique (3) étant disposée entre le différentiel (6) et une des roues tractées (7D), en entourant l'arbre de transmission (8D) reliant la roue tractée (7D) au différentiel (6), **caractérisée en ce que** la machine électrique (3) est logée à l'intérieur d'un corps (12) distinct de l'ensemble mécanique (4).

2. Chaîne de traction hybride selon la revendication 1, **caractérisée en ce que** le rotor (11) de la machine électrique (3) est monté solidairement sur un arbre creux (14) entourant l'arbre de transmission (8D) et dont l'extrémité (21 ; 25 ; 33) en regard du différentiel (6) est agencée pour être accouplée mécaniquement au différentiel (6)

3. Chaîne de traction hybride selon la revendication 2, **caractérisée en ce que** le rotor (11) est accouplé mécaniquement directement au différentiel (6).

4. Chaîne de traction hybride selon la revendication 3, **caractérisée en ce que** le différentiel (6) comporte une portion d'arbre creux (20) munie de cannelures qui engrènent avec l'extrémité (21) de l'arbre creux (14) de la machine électrique (3) ; l'arbre creux (14) comportant des cannelures complémentaires de celles de la portion d'arbre creux (20).

5. Chaîne de traction hybride selon la revendication 2, **caractérisée en ce que** le rotor (11) de la machine électrique (3) est accouplé mécaniquement au différentiel (6) via un moyen de réduction de vitesse (23 ; 28) disposé entre la machine électrique (3) et le différentiel (6).

6. Chaîne de traction hybride selon la revendication 5, **caractérisée en ce que** le moyen de réduction de vitesse (23) comporte un train épicycloïdal (24-27) disposé entre le rotor (11) de la machine électrique (3) et la couronne (19) du différentiel (6) ; l'extrémité (25) du rotor (11) correspondant au planétaire du train épicycloïdal (24-27) et la couronne (19) du différentiel (6) correspondant à la couronne (24) du train épicycloïdal (24-27).

7. Chaîne de traction hybride selon l'une quelconque des revendication 1 à 6, **caractérisée en ce que** la sortie (6D) du différentiel (6), recevant et supportant en rotation une première extrémité de l'arbre de transmission (8D), est maintenue en rotation à l'intérieur du rotor (11).

8. Chaîne de traction hybride selon la revendication 5, **caractérisée en ce que** le moyen de réduction de vitesse est un réducteur à pignons (28).

9. Chaîne de traction hybride selon la revendication 8, **caractérisée en ce que** le réducteur à pignons (28) comporte un premier et un deuxième pignons (29, 30) de diamètres différents ; les premier et deuxième pignons (29, 30) étant liés en rotation et engrenant respectivement avec la couronne (19) du différentiel (6) et une roue dentée (33) fixée au rotor (11).

10. Chaîne de traction hybride selon la revendication 9, **caractérisé en ce que** le premier pignon (29) est disposé dans un carter (36) fixé sur l'ensemble mécanique (4) contenant le différentiel (6) et **en ce que** le deuxième pignon (30) est disposé dans le corps (12) enfermant la machine électrique (3), les deux pignons (29, 30) étant accouplés en rotation par un arbre d'entraînement (39).

11. Chaîne de traction hybride selon la revendication 10, **caractérisé en ce que** la machine électrique (3) est creuse et rendue étanche par l'aménagement d'une paroi interne (40) encapsulant le rotor (11).

12. Chaîne de traction hybride selon l'une quelconque des revendications précédentes, dans laquelle la partie extrême (F) du corps (12) contenant la machine électrique (3), à l'opposé du différentiel (6), comporte un moyen (PR) formant palier pour la deuxième l'extrémité de l'arbre de transmission (8D).

13. Chaîne de traction hybride selon la revendication 12, **caractérisée en ce que** le moyen (PR) formant palier supporte la biellette anti-couple (B) du moteur thermique (2).

14. Véhicule hybride équipé d'une chaîne de traction hybride selon l'une quelconque des revendication précédentes.

## Claims

1. Hybrid drivetrain of a vehicle (1) comprising an internal combustion engine (2) coupled to a mechanical assembly (4) comprising a gearbox (5) coupled to a differential (6) which is itself coupled to the driven wheels (7G, 7D) of the vehicle (1) by their respective transmission shafts (8G, 8D), and at least one electric machine (3) comprising a stator (10) and a rotor (11) and cooperating with the internal combustion engine (2) via the mechanical assembly (4) in order to provide a combustion and/or electric drive to the driven wheels (7G, 7D), the electric machine (3) being positioned between the differential (6) and one of the driven wheels (7D) while surrounding the transmission shaft (8D) which connects the driven wheel (7D) to the differential (6),
**characterized in that** the electric machine (3) is housed inside a body (12) separate from the mechanical assembly (4).

2. Hybrid drivetrain according to Claim 1,
**characterized in that** the rotor (11) of the electric machine (3) is securely mounted on a hollow shaft (14) which surrounds the transmission shaft (8D) and of which the end (21; 25; 33) facing the differential (6) is designed to be mechanically coupled to the differential (6).

3. Hybrid drivetrain according to Claim 2,
**characterized in that** the rotor (11) is mechanical coupled directly to the differential (6).

4. Hybrid drivetrain according to Claim 3,
**characterized in that** the differential (6) has a hollow shaft portion (20) provided with splines which engage with the end (21) of the hollow shaft (14) of the electric machine (3), the hollow shaft (14) having splines which are complementary with those of the hollow shaft portion (20).

5. Hybrid drivetrain according to Claim 2,
**characterized in that** the rotor (11) of the electric machine (3) is mechanically coupled to the differential (6) via a speed reduction means (23; 28) positioned between the electric machine (3) and the differential (6).

6. Hybrid drivetrain according to Claim 5,
**characterized in that** the speed reduction means (23) comprises a planetary gearset (24-27) positioned between the rotor (11) of the electric machine (3) and the ring gear (19) of the differential (6), the end (25) of the rotor (11) corresponding to the sun gear of the planetary gearset (24-27), and the ring gear (19) of the differential (6) corresponding to the ring gear (24) of the planetary gear set (24-27).

7. Hybrid drivetrain according to any one of Claims 1 to 6, **characterized in that** the output (6D) of the differential (6), which receives and rotatably supports a first end of the transmission shaft (8D), is maintained in rotation inside the rotor (11).

8. Hybrid drivetrain according to Claim 5,
**characterized in that** the speed reduction means is a pinion reduction unit (28).

9. Hybrid drivetrain according to Claim 8,
**characterized in that** the pinion reduction unit (28) comprises first and second pinions (29, 30) having different diameters, the first and second pinions (29, 30) being connected in rotation and respectively meshing with the ring gear (19) of the differential (6) and with a toothed wheel (33) fastened to the rotor (11).

10. Hybrid drivetrain according to Claim 9,
**characterized in that** the first pinion (29) is arranged in a housing (36) fastened to the mechanical assembly (4) which contains the differential (6), and **in that** the second pinion (30) is arranged in the body (12) which encloses the electric machine (3), the two pinions (29, 30) being coupled in rotation by a drive shaft (39).

11. Hybrid drivetrain according to Claim 10,
**characterized in that** the electric machine (3) is hollow and is sealed by the arrangement of an internal wall (40) which encapsulates the rotor (11).

12. Hybrid drivetrain according to any one of the preceding claims, wherein the end part (F), on the opposite side to the differential (6), of the body (12) which contains the electric machine (3) comprises a bearing-forming means (PR) for the second end of the transmission shaft (8D).

13. Hybrid drivetrain according to Claim 12,
**characterized in that** the bearing-forming means (PR) supports the anti-torque rod (B) of the internal combustion engine (2).

14. Hybrid vehicle equipped with a hybrid drive train according to any one of the preceding claims.

## Patentansprüche

1. Hybridantriebskette eines Fahrzeugs (1) mit einem Verbrennungsmotor (2), der mit einer mechanischen Baugruppe (4) verbunden ist, die ein Getriebe (5) aufweist, das mit einem Differential (6) verbunden ist, das wiederum durch ihre jeweiligen Antriebswellen (8G, 8D) mit den angetriebenen Rädern (7G, 7D) des Fahrzeugs (1) verbunden ist, und mindestens einer elektrischen Maschine (3), die einen Stator (10) und einen Rotor (11) aufweist und über die mechanische Baugruppe (4) mit dem Verbrennungsmotor (2) zusammenwirkt, um den angetriebenen Rädern (7G, 7D) einen Wärmeantrieb und/oder elektrischen Antrieb zuzuführen, wobei die elektrische Maschine (3) zwischen dem Differential (6) und eines der angetriebenen Räder (7D) angeordnet ist, wobei sie die Antriebswelle (8D) umgibt und dabei das angetriebene Rad (7D) mit dem Differential (6) verbindet, **dadurch gekennzeichnet, dass** die elektrische Maschine (3) im Inneren eines von der mechanischen Baugruppe (4) verschiedenen Körpers (12) untergebracht ist.

2. Hybridantriebskette nach Anspruch 1, **dadurch gekennzeichnet, dass** der Rotor (11) der elektrischen Maschine (3) fest an einer die Antriebswelle (8D) umgebenden Hohlwelle (14) angebracht ist, deren Ende (21; 25; 33), das dem Differential (6) gegenüberliegt, zur mechanischen Kopplung mit dem Differential (6) angeordnet ist.

3. Hybridantriebskette nach Anspruch 2, **dadurch gekennzeichnet, dass** der Rotor (11) mechanisch direkt mit dem Differential (6) gekoppelt ist.

4. Hybridantriebskette nach Anspruch 3, **dadurch gekennzeichnet, dass** das Differential (6) einen Hohlwellenabschnitt (20) aufweist, der mit einer Keilverzahnung versehen ist, die mit dem Ende (21) der Hohlwelle (14) der elektrischen Maschine (3) in Eingriff steht; wobei die Hohlwelle (14) eine Keilverzahnung aufweist, die zu der des Teils der Hohlwelle (20) komplementär ist.

5. Hybridantriebskette nach Anspruch 2, **dadurch gekennzeichnet, dass** der Rotor (11) der elektrischen Maschine (3) über ein Untersetzungsmittel (23; 28), das zwischen der elektrischen Maschine (3) und dem Differential (6) angeordnet ist, mechanisch mit dem Differential (6) gekoppelt ist.

6. Hybridantriebskette nach Anspruch 5, **dadurch gekennzeichnet, dass** das Untersetzungsmittel (23) einen Planetenradsatz (24 - 27) enthält, der zwischen dem Rotor (11) der elektrischen Maschine (3) und dem Hohlrad (19) des Differentials (6) angeordnet ist; wobei das Ende (25) des Rotors (11) dem Zentralrad des Planetenradsatzes (24 - 27) und das Hohlrad (19) des Differentials (6) dem Hohlrad (24) des Planetenradsatzes (24 - 27) entspricht.

7. Hybridantriebskette nach einem der Ansprüche 1 bis 6, **dadurch gekennzeichnet, dass** der Ausgang (6D) des Differentials (6), der ein erstes Ende der Antriebswelle (8D) aufnimmt und drehbar stützt, drehbar im Rotor (11) gehalten wird.

8. Hybridantriebskette nach Anspruch 5, **dadurch gekennzeichnet, dass** das Untersetzungsmittel eine Ritzeluntersetzung (28) ist.

9. Hybridantriebskette nach Anspruch 8, **dadurch gekennzeichnet, dass** die Ritzeluntersetzung (28) ein erstes und ein zweites Ritzel (29, 30) mit unterschiedlichen Durchmessers aufweist; wobei das erste und das zweite Ritzel (29, 30) drehfest verbunden sind und mit dem Hohlrad (19) des Differentials (6) bzw. einem fest am Rotor (11) angebrachten Zahnrad (33) in Eingriff stehen.

10. Hybridantriebskette nach Anspruch 9, **dadurch gekennzeichnet, dass** das erste Ritzel (29) in einem Gehäuse (36) angeordnet ist, das an der mechanischen Baugruppe (4) befestigt ist, das das Differential (6) enthält, und dass das zweite Ritzel (30) in dem Körper (12) angeordnet ist, der die elektrische Maschine (3) umschließt, wobei die beiden Ritzel (29, 30) durch eine Antriebswelle (39) drehfest gekoppelt sind.

11. Hybridantriebskette nach Anspruch 10, **dadurch gekennzeichnet, dass** die elektrische Maschine (3) hohl ist und durch die Ausbildung einer den Rotor (11) einkapselnden Innenwand (40) abgedichtet ist.

12. Hybridantriebskette nach einem der vorhergehenden Ansprüche, bei der der Endteil (F) des Körpers (12), der die elektrische Maschine (3) enthält, gegenüber dem Differential (6) ein Mittel (PR) enthält, das ein Lager für das zweite Ende der Antriebswelle (8D) bildet.

13. Hybridantriebskette nach Anspruch 12, **dadurch gekennzeichnet, dass** das das Lager bildende Mittel (PR) die Drehmomentstütze (B) des Verbrennungsmotors (2) stützt.

14. Hybridfahrzeug, das mit einer Hybridantriebskette nach einem der vorhergehenden Ansprüche ausgestattet ist.
